# EUROPEAN PATENT SPECIFICATION

(11) **EP 4 545 902 B1**
(45) Date of publication and mention of the grant of the patent: **30.09.2026**
(21) Application number: 23831802.6
(22) Date of filing: 21.06.2023
(51) Int. Cl.: G01B 11/26, G02B 27/64, G01B 11/00

(54) **SIMULTANEOUS MULTI-AXIS DISPLACEMENT MEASUREMENT DEVICE USING OPTICAL SYSTEM**
VORRICHTUNG ZUR SIMULTANEN MEHRACHSIGEN VERSCHIEBUNGSMESSUNG MIT EINEM OPTISCHEN SYSTEM
DISPOSITIF DE MESURE DE DÉPLACEMENT MULTIAXIAL SIMULTANÉ À L'AIDE D'UN SYSTÈME OPTIQUE

(30) Priority: 28.06.2022 KR 20220079208
(43) Date of publication of application: 30.04.2025
(73) Proprietor: LG Electronics Inc., Yeongdeungpo-gu Seoul 07336 (KR)
(72) Inventor: SO, Eunseong, Seoul 06772 (KR); LEE, Intae, Seoul 06772 (KR); KIM, Kunsoo, Seoul 06772 (KR)
(74) Representative: Frenkel, Matthias Alexander
(86) International application number: PCT/KR2023/008610
(87) International publication number: WO 2024/005442

(56) References cited:
- CN-A- 103 983 199
- JP-A- 2000 234 907
- JP-A- 2005 208 027
- JP-A- 2016 109 457
- JP-A- 2020 067 372
- JP-A- 2020 067 372
- JP-A- H06 213 623

## Description

### Technical Field

The present disclosure relates to a displacement measurement device capable of simultaneously measuring movement of a rigid body in a direction toward each axis due to an external force by using an optical system.

### Background Art

With advances in technologies related to camera lenses and cameras, it has become possible to capture more precise and clearer pictures. According to advancements in such camera-related technologies, as a user's demand for capturing high-quality clear pictures has increased, technology for detecting shaking caused by a user's hand tremors, etc. and automatically compensating for an impact by the shaking has emerged.

Such a shake correction technology may be performed by detecting movement of a device caused by hand tremors, etc., and compensating for the detected movement through inverse calculation. Accordingly, a technology for accurately detecting movement of the device, that is, a rigid body has emerged.

A method for detecting movement of a rigid body in the related art involves detecting movement of the rigid body along each axis, i.e., detecting movement of the rigid body along each axis using three modules including a module configured to detect movement of the rigid body along an X-axis and a Y-axis, a module configured to detect movement of the rigid body along a Z-axis, and a module configured to detect tilting in an X-axis direction and tilting in a Y-axis direction.

The method for detecting movement of a rigid body in the related art in the related art uses three modules disposed separately to detect precise movement of the rigid body. Thus, there is such a problem that sizes and volume of the detection modules configured to detect movement of the rigid body are large.

In addition, in such a case of a module configured to detect movement of a rigid body in the related art, since a plurality of (e.g., three) different separate modules measure movement of the rigid body separately, it may be difficult to measure movement of the rigid body simultaneously, and there is such a problem that the plurality of modules need to be controlled separately. Accordingly, research is being actively conducted to improve convenience of control by simultaneously detecting multi-axis movement of the rigid body. JP 2020 067372 A discloses a mirror having a reflection part that is narrowed in the spot shape, which is provided on a measurement target. In the document it is described that a one-dimensional grating is arranged so as to be superimposed on the mirror, and a measurement light having a wider irradiation range than the reflection part is irradiated on the mirror so that the reflection part is included in the irradiation range.

### Disclosure of Invention

### Technical Problem

Therefore, to obviate those problems, an aspect of the detailed description is to provide a simultaneous multi-axis displacement measurement device capable of simultaneously measuring multi-axis direction movement, i.e., multi-axis displacement of a rigid body.

In addition, an aspect of the detailed description is to provide a simultaneous multi-axis displacement measurement device configured such that one measurement device is capable of detecting movement of the rigid body in multi-axis directions.

### Solution to Problem

The invention is defined by the appended claims.

### Advantageous Effects of Invention

Hereinafter, an effect of a simultaneous multi-axis displacement measurement device according to the present disclosure will be described.

According to at least one of embodiments of the present disclosure, the present disclosure has an advantage in that one measurement device is capable of simultaneously detecting movement of a rigid body in multi-axial directions, thereby facilitating control for detecting the movement of the rigid body.

### Brief Description of Drawings

FIG. 1 is a block diagram illustrating a structure of a simultaneous multi-axis displacement measurement device configured to detect movement of a rigid body according to an embodiment of the present disclosure.
FIG. 2 is a block diagram illustrating a configuration of a measurement part configured to measure displacement for each axis according to the movement of the rigid body of FIG. 1.
FIG. 3 is a diagram illustrating an example of detecting, by the measurement part of FIG. 2, displacement according to movement of the rigid body in an X-axis tilt or Y-axis tilt direction.
FIG. 4 is a diagram illustrating an example of detecting, by the measurement part of FIG. 2, displacement according to movement of the rigid body in an X-axis direction or Y-axis direction.
FIG. 5 is a diagram illustrating an example of detecting, by the measurement part of FIG. 2, displacement according to movement of the rigid body in a Z-axis direction.
FIG. 6 is a diagram illustrating an example of a configuration of a measurement part including a window configured to prevent scattered light caused by a test mirror mounted on the rigid body.
FIG. 7 is a diagram illustrating an example of arranging a first window along a Z-axis direction to be perpendicular to the rigid body.
FIG. 8 is a flowchart illustrating an operation process in which the simultaneous multi-axis displacement measurement device according to an embodiment of the present disclosure measures movement of the rigid body.
FIG. 9 is a detailed flow chart illustrating a process of calculating displacement for each axis, the process being described with reference to FIG. 8.
FIGS. 10A and 10B are diagrams illustrating examples of simultaneously measuring, by the simultaneous multi-axis displacement measurement device according to an embodiment of the present disclosure, movement of the rigid body in five-axis directions.

### Mode for the Invention

It is noted that the technical terms used herein are used only to describe specific embodiments and are not intended to limit the disclosure. In addition, a singular representation used herein may include a plural representation unless it represents a definitely different meaning from the context. As used herein, "consists of." or "including." In the present disclosure, the terms "comprising" and "including" should not be construed to necessarily include all of the elements or steps disclosed herein, and should be construed not to include some of the elements or steps thereof, or should be construed to further include additional elements or steps.

In addition, in describing the present disclosure, when a detailed explanation for a related known function or construction is considered to unnecessarily divert the gist of the present disclosure, such explanation has been omitted but would be understood by those skilled in the art.

Like reference numerals in the drawings denote like or similar elements. In addition, it will be understood that although the terms "first", "second", etc. may be used herein to describe various components, these components should not be limited by these terms. These terms are generally only used to distinguish one element from another.

It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Meanwhile, hereinafter, an 'axis' means an axis along which a rigid body moves or rotates, and even when axes are in a same direction, the axes may be distinguished as different axes depending on movement of the rigid body. For example, when the rigid body moves in a planar direction, an X-axis and Y-axis may be in axes in a same direction, and when the rigid body rotates (tilts), an X-axis (hereinafter referred to as a tilt X-axis) and a Y-axis (hereinafter referred to as a tilt Y-axis) which become rotational axes may be axes in a same direction. However, since forms in which the rigid body moves are different, the X-axis and the Y-axis according to planar movement of the rigid body, and the tilt X-axis and the tilt Y-axis according to rotational movement of the rigid body are to be distinguished from each other and described as different axes, respectively, in the following description. Therefore, hereinafter, it is assumed that five axes refers to an X-axis, a Y-axis, a Z-axis, a tilt X-axis, and a tilt Y-axis.

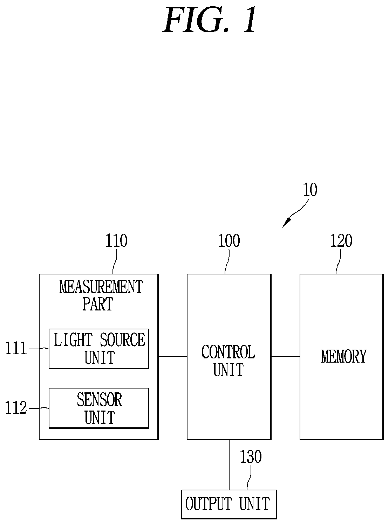

FIG. 1 is a block diagram illustrating a structure of a simultaneous multi-axis displacement measurement device 10 configured to detect movement of a rigid body according to an embodiment of the present disclosure.

Referring to FIG. 1, the simultaneous multi-axis displacement measurement device 10 according to an embodiment of the present disclosure may be configured to include a control unit 100, a measurement part 110 connected to the control unit 100, and a memory 120. In addition, the simultaneous multi-axis displacement measurement device 10 may further include an output unit 130 configured to output movement of the rigid body measured according to control by the control unit 100. Since the configuration of FIG. 1 is not an essential configuration of the simultaneous multi-axis displacement measurement device 10 according to an embodiment of the present disclosure, some components may not be included or more components may be further included.

The measurement part 110 includes a test mirror mounted on the rigid body when the rigid body is placed, and may measure displacement along at least one axis according to movement of the rigid body based on at least one piece of light reflected from the test mirror. Here, the test mirror may be a flat plate having a reflective material.

To do so, the measurement part 110 may be configured to include a sensor unit 111 including a plurality of sensors configured to detect movement of the rigid body along each axis, and a light source unit 112 including a plurality of light sources configured to emit light incident on the test mirror to detect movement of the rigid body along each axis. The light source unit 112 may be configured as a laser diode (LD), a light emitting diode (LED), or a lamp each configured to emit light not only in a visible light band but also in an invisible band, for example, in an ultraviolet (UV) or infrared band.

The measurement part 110 may constitute an optical system including a plurality of light sources, a plurality of lenses, and a plurality of beam splitters each included in the light source unit 112. Here, a lens may be one lens or a compound lens including a plurality of grouped lenses. In addition, the measurement part 110 may measure, through each sensor, a travel distance and a travel direction of reflected light reflected from the test mirror through the optical system.

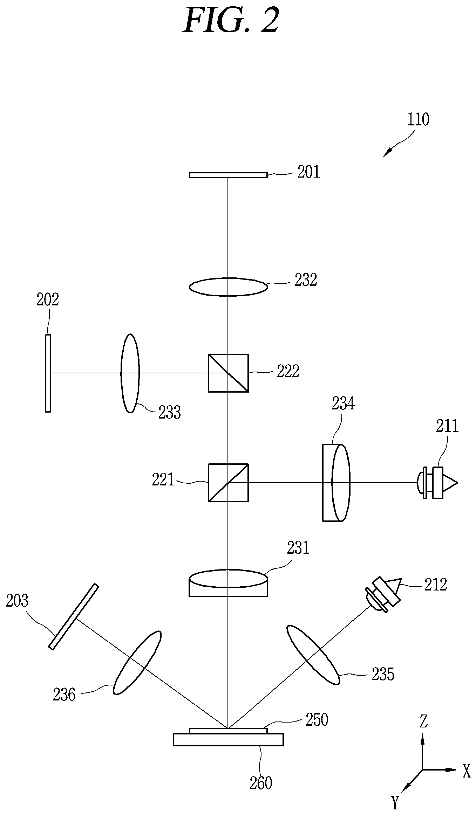

Hereinafter, in the measurement part 110, a configuration of the optical system being constituted by the light source unit 112, i.e., the plurality of light sources, the plurality of lenses, the beam splitters are described in detail with reference to FIGS. 2 to 7.

Meanwhile, the measurement part 110 may provide, to the control unit 100, a detection value of each sensor of the sensor unit 111, that is, information about a distance by which and a direction in which the reflected light has traveled. Then, the control unit 100 may detect movement of a measurement target, i.e., a rigid body for each of a plurality of axes based on a travel distance and a travel direction of the reflected light each received from the measurement part 110. To do so, the control unit 100 may calculate displacement for each axis corresponding to the travel distance and direction of the reflected light based on at least one distance-displacement table for each axis prestored in the memory 120.

Meanwhile, the controller 100 may generally control all operations of the simultaneous multi-axis displacement measurement device 10. For example, the control unit 100 may control turning on or off of the measurement part 110 by controlling power supply to the sensor unit 111 and the light source unit 112 each included in the measurement part 110. In addition, the control unit 100 may be configured to be connected to each sensor of the sensor unit 111 and receive a detection value of each sensor when the measurement part 110 is turned on.

In addition, the control unit 100 may read the distance-displacement table for each axis prestored in the memory 120, and calculate displacement for each axis in correspondence with the detection value of each sensor based on values in the read table. In addition, when the simultaneous multi-axis displacement measurement device 10 includes the output unit 130, the calculated displacement for each axis may be output as movement of the rigid body through the output unit 130.

The memory 120 may include a program and data for operation of the control unit 100. For example, the memory 120 may store detection values of respective sensors of the measurement part 110, the detection values received by the control unit 100, and displacement for each axis calculated by the control unit 100 for each of the detection values. In addition, the control unit 100 may store, for each of a plurality of axes, a distance-displacement table for calculating displacement for each axis with respect to each of the detection values.

For example, the memory 120 may include an XY-axes distance-displacement table for calculating displacement according to X-axis or Y-axis movement, a Z-axis distance-displacement table for calculating Z-axis displacement, and an XY tilting distance-displacement table for calculating X-axis tilting displacement or Y-axis tilting displacement.

Here, each sensor of the measurement part 110 may detect a travel distance and a travel direction of reflected light for detecting displacement of different axes. For example, a first sensor of the sensor unit 111 may be a sensor configured to detect movement of reflected light according to movement of the rigid body in an X-axis or a Y-axis. In addition, a second sensor may be a sensor for detecting movement of reflected light according to X-axis tilting or Y-axis tilting of the rigid body. In addition, a third sensor may be a sensor for detecting movement of reflected light according to movement of the rigid body in a Z-axis.

Therefore, sensors corresponding to respective distance-displacement tables included in the sensor unit 111 may be different from each other. For example, when detection values detected by the first to third sensors of the sensor unit 111 are as described above, the XY-axes distance-displacement table may correspond to the first sensor. In addition, the XY tilting distance-displacement table may correspond to the second sensor. In addition, the Z-axis distance-displacement table may correspond to the third sensor. Then, the control unit 100 may detect displacement corresponding to a detection value of each sensor from a table corresponding to each sensor, and detect displacement of the rigid body for each axis according to the detected displacement.

Meanwhile, in the aforementioned description, it has been described as an example that the memory 120 includes tables including information about displacement for each axis according a travel distance of reflected light. However, alternatively, the memory 120 may include information about displacement for each axis according to a preset unit distance for each axis. In this case, the control unit 100 may calculate displacement for each axis in correspondence with a travel distance of reflected light according to a detection value of a sensor, based on the displacement according to the unit distance stored in the memory 120. In this case, displacements may be different from each other even when the unit distance is same, with respect to each axis (e.g., an X-axis and a Y-axis, a Z-axis, a tilt X-axis, and a tilt Y-axis). Additionally, unit distances corresponding to the same displacement may be different from each other. In addition, in a case of the X-axis, the Y-axis, and the Z-axis, displacement according to a travel distance of reflected light may be calculated as a distance. However, in a case of the tilt X-axis and the tilt Y-axis, displacement according to a travel distance of reflected light may be calculated as an angle at which a rigid body is tilted.

Meanwhile, the output unit 130 may output the calculated displacement for each axis as detected movement of the rigid body, according to control by the control unit 100. To do so, the output unit 130 may include at least one of a display unit capable of outputting visual information and an audio output unit capable of outputting audio information. Alternatively, the output unit 130 may include a communication module configured to perform communication using a preset communication method. In this case, the output unit 130 may output information about detected movement of the rigid body by transmitting information about displacements for respective axes calculated by the control unit 100 to a preset device using the communication module.

Meanwhile, FIG. 2 is a block diagram illustrating a configuration of the measurement part 110 configured to measure displacement for each axis according to movement of the rigid body as described with reference to FIG. 1.

Referring to FIG. 2, a test mirror 250 combined with or mounted on a rigid body to be measured may be placed at a center of a lower surface of the measurement part 110 in the present disclosure. The test mirror 250 may include a mount part 260 capable of being combined with the rigid body, and the mount part 260 may be disposed to be capable of moving freely in directions along a plurality of axes (e.g., five axes).

Here, an axis perpendicular to a plane on which the test mirror 250 is placed may be a Z-axis, and when a center of the test mirror 250 is assumed as an origin of the Z-axis, a left-right direction of the test mirror 250 may constitute an X-axis and a front-back direction of the test mirror 250 may constitute a Y-axis with reference to the origin (i.e., a reference point).

Meanwhile, when the test mirror 250 rotates (tilts) in a direction along the X-axis according to movement of a rigid body (not shown) combined with the mount part 260, an axis (the X-axis) along which the test mirror 250 tilts may have a same direction as that of the X-axis. In addition, when the test mirror rotates (tilts) in a direction along the Y-axis according to movement of the rigid body, an axis (the Y-axis) along which the test mirror tilts may have a same direction as that of the Y-axis. However, since movements of the rigid body are different from each other, the X-axis and the Y-axis along which the test mirror tilts are referred to as a tilting X-axis and a tilting Y-axis to be distinguished from the X-axis and Y-axis. Accordingly, the test mirror 250 may move in at least one direction among directions along the tilting X-axis and the tilting Y-axis, as well as the X-axis, Y-axis, and Z-axis according to movement of the rigid body.

In this case, as a center of the test mirror is located at the origin of the Z-axis, the X-axis, and the Y-axis and the rigid body constitutes a non-tilted state, that is, a horizontal state, a state in which the test mirror coincides with a plane defined by the X-axis and the Y-axis may be a reference state. That is, a state in which the test mirror 250 combined with the rigid body through the mount part 260 does not move or rotate is referred to as the reference state.

Hereinafter, in the measurement part 110, an optical system constituted by a plurality of light sources, a plurality of lenses, and a plurality of beam splitters is described based on the reference state.

First, a first lens 231, a first beam splitter 221, a second beam splitter 222, a second lens 232, and a first sensor 201 may be sequentially arranged along a Z-axis perpendicular to the test mirror 250 which is in the reference state. Here, the first lens 231 may be a lens configured to refract light incident along the Z axis into parallel light to be incident on the test mirror 250.

Meanwhile, the first beam splitter 221 may reflect, onto the first lens 231, a part of light incident from the first light source 211 arranged along an X-axis or a Y-axis each perpendicular to the Z-axis. A remaining part of the light incident from the first light source 211 may pass through the first beam splitter 221.

A fourth lens 234 may be placed between the first light source 211 and the first beam splitter 221. Meanwhile, light emitted from the first light source 211 may pass through the fourth lens 234 to be incident on the first beam splitter 221, and may be reflected onto the first lens 231 by the first beam splitter 221.In addition, according to a combination between the fourth lens 234 and the first lens 231, the light emitted from the first light source 211 may be incident on the test mirror 250 as parallel light. That is, incidence of the light emitted from the first light source 211 in parallel with the test mirror 250 may be obtained according to the combination between the fourth lens 234 and the first lens 231. To do so, the first light source 211 may be positioned at a focal point of a lens group including the fourth lens 234 and the first lens 231. Here, the first light source 211 may be a point light source.

Meanwhile, light distributed and reflected by the first beam splitter 221 may be incident on the test mirror 250 through the first lens 231. In addition, the light may be reflected by the test mirror 250. Then, reflected light of the test mirror 250 may be incident on the first lens 231.

Meanwhile, the reflected light of the test mirror 250, having passed through the first lens 231, may be incident on the second beam splitter 222 positioned after the first beam splitter 221 along the Z-axis with reference to the origin.

In addition, when the reflected light of the test mirror 250 is incident on the second beam splitter 222, a part of the reflected light may be transmitted in a direction toward the Z-axis through the second beam splitter 222, and a remaining part of the reflected light may be reflected in a direction along the X-axis or the Y-axis perpendicular to the Z-axis through the second beam splitter 222. As an example, the second beam splitter 222 may transmit 50% of incident light and reflect another 50% thereof.

Meanwhile, the reflected light of the test mirror 250 having been reflected through the second beam splitter 222 may be incident on a third lens 233. Accordingly, the part of the reflected light of the test mirror 250 reflected onto the second beam splitter 222 may pass through the third lens 233 and converged toward a focal point of the third lens 233.

In addition, light reflected onto the second beam splitter 222 may be disposed to be concentrated onto an upper surface of the second sensor 202 by the third lens 233. Accordingly, the second sensor 202 may detect a position of the part of the reflected light of the test mirror 250 converged by the third lens 233 and concentrated on the second sensor 202. In this case, since the test mirror 250 is at the reference position, the position of the concentration detected by the second sensor 202 may also be the reference position.

Meanwhile, when the test mirror 250 is tilted along the X-axis or Y-axis, inclination of the test mirror 250 may be caused by the tilting. In addition, when the inclination of the test mirror 250 occurs, an angle at which the reflected light reflected onto the test mirror 250 is incident on a lens surface of the first lens 231 may be changed. Then, a path of light passing through the first lens 231 may vary depending on the incident light.

Thus, a path of light incident on the second beam splitter 222 may be changed, and accordingly, a position of a focal point defined on the third lens 233 may be changed. That is, a position of light concentration detected by the second sensor 202 may be moved from the reference position.

Meanwhile, when a tilting angle of the test mirror 250 is great, the position of the light concentration detected by the second sensor 202 may further move significantly. That is, a distance by which and a direction in which a position of concentration of the reflected light of the test mirror 250 detected by the second sensor 202 is moved from the reference position may correspond to an X-axis tilting state or a Y-axis tilting state of the test mirror 250. Accordingly, in the second sensor 202, based on the distance by which and the direction in which the position of the concentration of the reflected light of the test mirror 250 has moved, the control unit 100 may detect an X-axis tilting state or a Y-axis tilting state of the test mirror 250. That is, the second sensor 202 may be a sensor configured to detect the X-axis tilting state or the Y-axis tilting state of the test mirror 250.

Meanwhile, a part of the reflected light of the test mirror 250 that has passed through the second beam splitter 222 may be incident on the second lens 232. Here, the second lens 232 may be a convex lens. In this case, since the second lens 232 is positioned at a distance exceeding a focal length of a convex lens of the first lens 231, light diverged from the convex lens of the first lens 231 past the focal length may be refracted into parallel light through the second lens 232, like a Keplerian telescope.

In this case, the convex lens of the first lens 231 and the test mirror 250 may be spaced apart from each other by a distance in correspondence with a convex lens focal length f1 of the first lens 231 so that light passing through the second lens 232 may be parallel light, and the second lens 232 and the convex lens of the first lens 231 may be spaced apart from each other by a distance f1+f2 that is a sum of the convex lens focal length f1 of the first lens 231 and a focal length f2 of the second lens 232. In addition, the first sensor 201 may be placed after the second lens 232 along the Z-axis direction. Here, the first sensor 201 and the second lens 232 may be spaced apart from each other by the focal length f2 of the second lens 232.

Meanwhile, as described above, the convex lens of the first lens 231 and the second lens 232 may constitute a structure of a Keplerian telescope. That is, the first lens 231 and the second lens 232 may be Keplerian lenses. Accordingly, the reflected light of the test mirror 250 may pass through the first lens 231 and inverted to be incident on the second lens 232. In addition, the parallel light having passed through the second lens 232 may be incident on the first sensor 201. Therefore, like being viewed through a telescope, when a position of the test mirror 250 moves in the X-axis or Y-axis direction, the movement of the test mirror 250 may be detected by the first sensor 201. However, due to having a Keplerian telescope structure in which an image defined between an objective lens and an eyepiece is inverted, an image defined on the first sensor 201 by the reflected light of the test mirror 250 may move in a direction opposite to that of the movement of the test mirror 250.

Meanwhile, a fifth lens 235 and a second light source 212 may be sequentially arranged along a direction of a first diagonal line tilted by a preset angle θ from the Z-axis to the origin, that is, a center of the test mirror in the reference state. In addition, a sixth lens 236 and a third sensor 203 may be arranged along a second diagonal direction tilted at the preset angle θ with respect to a center of the test mirror in the reference state identically to face the first diagonal line on which the fifth lens 235 and the second light source 212 are arranged.

Since the first diagonal line and a second diagonal line are inclined at the same angle θ from the Z-axis with respect to the origin, the third sensor 203 is positioned at a same angle (a reflection angle) as an incident angle at which light emitted from the second light source 212 is incident on the center of the test mirror 250, and accordingly, the light emitted from the second light source 212 may be reflected onto the test mirror 250 and incident on the third sensor 203.

In this case, the fifth lens 235 and the sixth lens 236 may be configured as convex lenses. In addition, a distance between the fifth lens 235 and the test mirror 250 may correspond to a position on which the light emitted from the second light source 212 is concentrated by the fifth lens 235, and the concentrated light may be reflected on the test mirror 250. In addition, a distance between the sixth lens 236 and the third sensor 202 may correspond to a distance for which the reflected light is concentrated by the sixth lens 236.

Accordingly, the light emitted from the second light source 212 may be refracted at the fifth lens 235 and concentrated on one point of the test mirror 250, for example, one point (a focal point) at a center when the test mirror 250 is in the reference state, and the light concentrated on the focal point may be reflected from the test mirror 250. In this case, since an incident angle at the second light source 212 is the preset angle θ, a reflection angle is also defined as the preset angle θ, and accordingly, the light from the second light source 212 having been reflected and diverged from the test mirror 250 may be incident on the sixth lens 236 and refracted at the sixth lens 236 in a form of converging back in a direction toward a focal point of the sixth lens.

Therefore, when the third sensor 203 is spaced apart from the sixth lens 236 by a same distance as a light concentration distance of the sixth lens 236, the light refracted from the sixth lens 236 may be concentrated on a surface of the third sensor 203 to define a focal point. In this case, when the test mirror 250 is in the reference state, i.e., a state of being at the origin of the Z-axis, a position of the reflected light of the test mirror detected by the third sensor 203 may be a point corresponding to a Z-axis position of the test mirror 250.

Meanwhile, when the test mirror 250 is moved in the Z-axis direction, a position at which the light from the second light source 212 is concentrated on the test mirror 250 may be changed. Then, a position at which light is reflected onto the test mirror 250 may also be changed, and such a change in the position of the light concentration may cause a change in an image on the sixth lens 236, thereby changing a position of the reflected light of the test mirror detected by the third sensor 203.

For example, when the test mirror 250 moves toward a direction (hereinafter referred to as an upward direction) in which the first sensor 201 is positioned along a Z-axis direction, a position on which the light from the second light source 212 is incident may be changed according to upward movement of the test mirror 250. Then, since an image is inverted at a focal point of the test mirror 250, a position of the reflected light of the test mirror detected by the third sensor 203 may be moved in a direction opposite to that of movement of the test mirror 250, that is, may be moved downward along the Z-axis.

Accordingly, based on a distance by which and a direction in which a concentration position of the reflected light of the test mirror 250 is moved in the third sensor 203, the control unit 100 may detect a state of movement of the test mirror 250 along the Z-axis. That is, the third sensor 203 may be a sensor configured to detect Z-axis movement displacement of the test mirror 250.

Here, when the preset angle θ defined by the first and second diagonal lines with the Z-axis based on the origin is great, Z-axis displacement of the test mirror 250 may be accurately calculated. However, when the preset angle θ is great, volume of a displacement measurement device according to the embodiment of the present disclosure may be great. Therefore, to minimize the volume, the preset angle θ may be determined within a range of 25 to 40 degrees.

Meanwhile, when the test mirror 250 has moved along at least one of displacements in five-axis directions, in an optical system configured like the measurement part 110, displacement of the test mirror 250 in the X-axis direction and the Y-axis direction may be detected according to movement of a position of the reflected light of the test mirror 250 detected by the first sensor 201, a tilting X-axis angle and a tilting Y-axis angle of the test mirror 250 may be detected according to movement of a position of the reflected light of the test mirror 250 detected by the second sensor 202, and displacement of the test mirror 250 in a Z-axis direction may be detected according to movement of a position of the reflected light of the test mirror 250 detected by the third sensor 203, simultaneously. That is, through the optical system constituted as described above, the measurement part 110 may simultaneously measure displacement according to at least one direction among displacements according to five-axis directions (X-axis displacement, Y-axis displacement, Z-axis displacement, a tilting X-axis angle, and a tilting Y-axis angle) of the test mirror 250.

Hereinafter, examples in which displacement of the test mirror 250 is detected by the first sensor 201 to the third sensor 203 are described in detail.

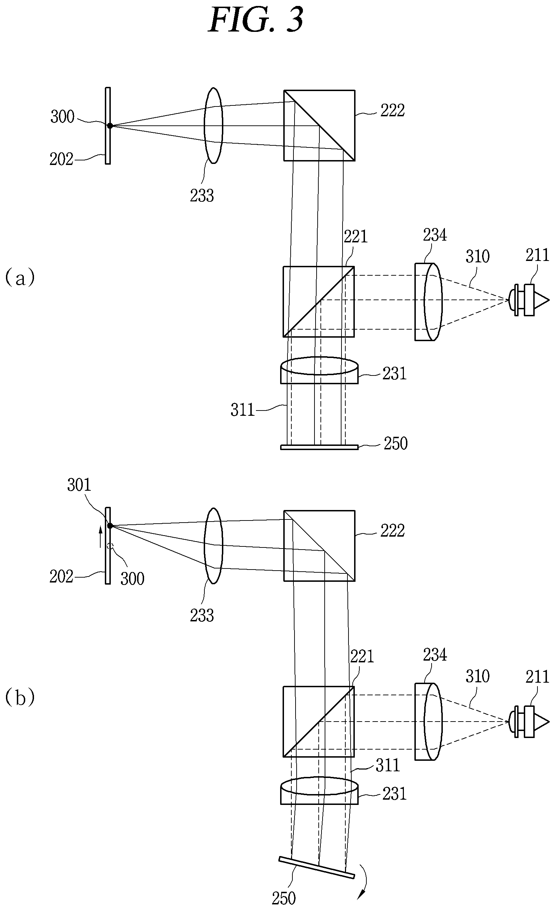

FIG. 3 is a diagram illustrating an example of detecting, by the measurement part 110 of FIG. 2, displacement according to movement of a rigid body, i.e., the test mirror 250 in an X-axis tilt or Y-axis tilt direction.

First, referring to (a) of FIG. 3, (a) of FIG. 3 illustrates an example in which the test mirror 250 is in the reference state.

As shown in (a) of FIG. 3, when the test mirror 250 is not tilted in an X-axis or Y-axis direction, light emitted from the first light source 211 may be incident on the first beam splitter 221 through the fourth lens 234. In this case, the first beam splitter 221 may be arranged to reflect light incident along an X-axis or a Y-axis perpendicular to a Z-axis downwardly along the Z-axis. To do so, the first beam splitter 221 may have a reflective surface positioned at an angle of 45 degrees with respect to the Z axis.

Then, as shown in (a) of FIG. 3, the light emitted from the first light source 211 positioned on the X-axis or Y-axis perpendicular to the Z-axis may be incident on the fourth lens 234. In this case, the light from the first light source 211 may be incident on a surface of the fourth lens 234 facing the first light source 211 and transmitted through a surface facing the first beam splitter 221. Therefore, the light from the first light source 211 may be incident on the first beam splitter 221.

In this case, since the first beam splitter 221 has the reflective surface arranged at an angle of 45 degrees with respect to the Z axis as described above, parallel light concentrated from the first light source 211 may be reflected onto the first beam splitter 221 and incident along the Z axis in a downward direction toward which the test mirror 250 is arranged. Accordingly, the light may be incident on a surface (hereinafter referred to as a first surface) of the first lens 231 facing the first beam splitter 221 and transmitted through a surface (hereinafter referred to as a second surface) of the first lens 231 facing the test mirror 250. Therefore, the light incident on the first lens 231 may be incident on the test mirror 250 in a form of parallel light.

Meanwhile, as described above, since the test mirror 250 is not tilted in the X-axis or Y-axis direction, the light may be reflected in a same direction as that of an incident angle, that is, in a direction perpendicular to the Z-axis. Therefore, the light may be incident on the second surface of the first lens 231.

Meanwhile, as described above, the first lens 231 may be a lens that transmits light so that the light incident on the first surface is transmitted through a second surface, and parallel light incident on the second surface is converged on the first surface in a focal direction. Accordingly, the reflected light of the test mirror 250 having passed through the first lens 231 may be converged at a focal point according to a focal length of the first lens 231 and, when the focal length is passed, an image may become inverted, may be diverged with an image being inverted.

Meanwhile, as shown in (a) of FIG. 3, the light having passed through the first lens 231 may pass through the first beam splitter 221 to have an image inverted at a focal length of the first lens 231, and then, be diverged when passing beyond the focal length.

Meanwhile, the second beam splitter 222 may be a beam splitter having a reflective surface arranged thereon to reflect light incident from a lower portion of the Z-axis toward the X-axis or Y-axis direction. To do so, the reflective surface of the second beam splitter 222 may have arranged at an angle of 135 degrees with respect to the Z axis. Accordingly, as shown in (a) of FIG. 3, the reflected light of the test mirror 250 diverged while passing beyond the focal length may be reflected by the reflective surface of the second beam splitter 222 in the X-axis direction or the Y-axis direction.

Meanwhile, the third lens 233 configured as a convex lens and the second sensor 202 may be placed in a direction corresponding to the reflective surface of the second beam splitter 222. Therefore, the third lens 233 may transmit light so that reflected light reflected from the reflective surface of the second beam splitter 222 is converged in a focal direction of the third lens 233. Here, since the second sensor 202 is arranged in a position on which light is concentrated by the third lens 233, the light concentrated by the third lens 233 may define a focal point on a surface of the second sensor 202.

In this state, the test mirror 250 may be tilted with respect to the X-axis or Y-axis direction. For example, as shown in (b) of FIG. 3, it may be assumed that the test mirror 250 is tilted (Y-axis tilting) based on the Y-axis.

In this case, a reflection angle of the test mirror 250 may be changed as the test mirror 250 is tilted. That is, as shown in (b) of FIG. 3, when the test mirror 250 is tilted along the Y-axis, the test mirror 250 is tilted according to the Y-axis tilting. Accordingly, a reflection angle of the test mirror 250 is decreased (assuming that with respect to the Z-axis, when the test mirror 250 is tilted to a right side, the reflection angle is decreased and, when the test mirror 250 is tilted to a left side, the reflection angle is increased).

Then, as shown in (b) of FIG. 3, as an incident angle at which reflected light reflected from the test mirror 250 is incident on the first lens 231 is changed, an incident angle of light incident on the second beam splitter 222 is changed. That is, when the reference state is a state in which light is emitted on a front of the second surface of the first lens 231, a state in which the test mirror 250 is tilted as shown in (b) of FIG. 3 may be a state in which light is emitted on a right side of the second surface of the first lens 231.

Accordingly, since an incident angle of light incident on a reflective surface of the second beam splitter 222 is changed, a reflection angle of light reflected from the reflective surface of the second beam splitter 222 may be also changed. Therefore, as shown in (b) of FIG. 3, a position of reflected light which passes through the third lens 233 and is concentrated on the second sensor 202 may be changed.

Here, a position of the reflected light concentrated on the second sensor 202 may vary depending on a tilting angle of the test mirror 250. That is, when the tilting angle of the test mirror 250 is great, a reflection angle of the test mirror 250 is greatly changed, and accordingly, a reflection angle of light reflected from the reflective surface of the second beam splitter 222 may be also changed greatly. Accordingly, a position of reflected light concentrated on the second sensor 202 may be also moved away from a position of the reflected light that was detected in the reference state. That is, a travel distance of reflected light detected by the second sensor 202 may correspond to a tilting angle of the test mirror 250.

Meanwhile, when a tilting direction of the test mirror 250 is changed, a travel direction of the reflected light may be also changed. For example, as shown in (b) of FIG. 3, when the test mirror 250 is tilted along the Y-axis, a position of reflected light concentrated on the second sensor 202 may be moved in the Z-axis direction due to a structure of the optical system shown in FIG. 3. However, when the test mirror 250 is tilted along the X-axis, a position of reflected light concentrated on the second sensor 202 may be moved in the Y-axis direction due to a change in a reflection angle according to a tilted direction of the test mirror 250. That is, a travel direction of the reflected light detected by the second sensor 202 may correspond to a tilted direction of the test mirror 250. Accordingly, the control unit 100 may detect a tilting angle and a tilting direction of the test mirror 250, i.e., tilting displacement in the X-axis or Y-axis direction, based on a distance by which and a direction in which the position of the concentration of the reflected light is moved from a position of concentration of the reflected light on the second sensor 202 in correspondence with the reference state according to movement of the test mirror 250.

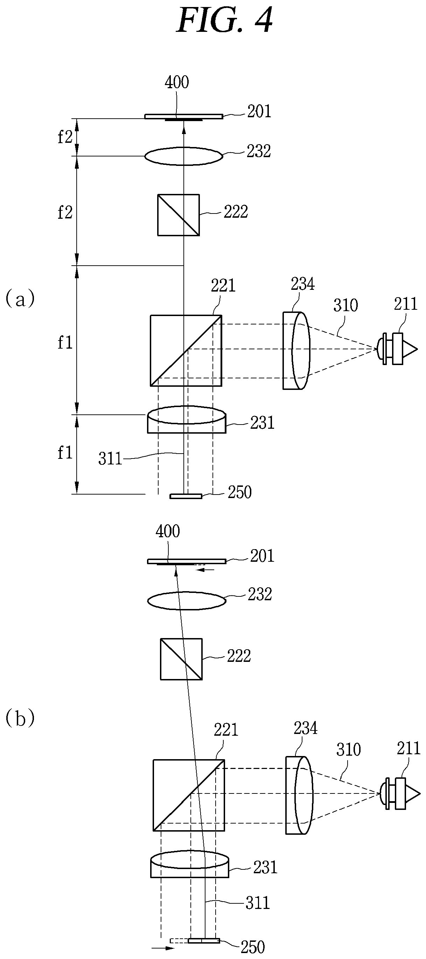

Meanwhile, FIG. 4 is a diagram illustrating an example of detecting, by the measurement part of FIG. 2, displacement according to movement of a rigid body, i.e., the test mirror 250 in an X-axis direction or Y-axis direction.

First, referring to (a) of FIG. 4, as described above with reference to FIG. 3, light from the first light source 211 incident on a first surface of the fourth lens 234 may be reflected on a reflective surface of the first beam splitter 221 to be incident on the first surface of the first lens 231. Then, parallel light may be incident on the test mirror 250 through a combination of the fourth lens 234 and the first lens 231.

Here, an area of the test mirror 250 may be smaller than an area onto which the parallel light is incident. That is, as shown in (a) of FIG. 4, only a part of the parallel light that passes through the first lens 231 and is incident on the test mirror 250 may be reflected onto the test mirror 250. In addition, only a part of the reflected parallel light may be incident on the first sensor 201 through the first lens 231 to the second lens 232 along an optical axis.

Therefore, when the test mirror 250 is in the reference state, light may be reflected in a vertical direction along the Z-axis (an optical axis), incident on a center of the first lens 231, and transmitted in a direction converging toward a focal direction of the first lens 231 as shown in (a) of FIG. 4.

Here, the first beam splitter 221 and the second beam splitter 222 may be positioned within a focal length of the first lens 231. Therefore, light transmitted through the reflective surface of the first beam splitter 221 may define a focal point at the focal length of the first lens 231. Then, as the light passes the focal point, the light may define an inverted image and be diverged. In addition, the diverged light may pass through a reflective surface of the second beam splitter 222.

Meanwhile, the second lens 232 and the first sensor 201 may be placed after the second beam splitter 222 along the Z-axis. Here, the second lens 232 may be configured as a convex lens. Accordingly, the reflected light of the test mirror 250 that have passed through the second beam splitter 222 may be diverged and incident on the second lens 232. Then, the light incident on the second lens 232 may be converted into parallel light and incident on the first sensor 201. Therefore, a position of the reflected light may be detected at a central portion of the first sensor 201.

Here, the test mirror 250 may be placed at a focal length (a first focal length: f1) of the first lens 231. In addition, the first lens 231 and the second lens 232 may be spaced apart from each other by a distance f1 + f2 that is a sum of the first focal length f1 and a focal length of the second lens 232 (a second focal length: f2). In addition, the first sensor 201 may be placed at a distance apart from the second lens 232 by the second focal length f2. Additionally, the first lens 231 and the test mirror 250 may be spaced apart from each other by the first focal length f1.

Therefore, the first lens 231 may perform a function similar to that of an objective lens of a Keplerian telescope, and the second lens 232 may perform a function similar to that of an eyepiece lens of the Keplerian telescope. That is, an image on the test mirror 250 (hereinafter referred to as a reflected image) defined by reflecting light incident from the first light source 211 may be inverted at a focal point between the first lens 231 and the second lens 232 to be defined on the first sensor 201.

Therefore, when a position of the test mirror 250 moves in the X-axis or Y-axis direction, the reflected image defined on the first sensor 201 may be moved according to the movement of the test mirror 250. In this case, since the reflected image is an inverted image, the reflected image may move in an opposite direction to a movement direction of the test mirror 250.

**The** light incident on the test mirror 250 may be incident more widely (to be larger) than the test mirror 250. At this time, only a part corresponding to a size of the test mirror 250 is reflected by the test mirror 250 and transmitted through the first lens 231. Thus, when X-axis and Y-axis displacement occurs in the test mirror 250, a position of the reflected part is changed, and accordingly, an optical path through which the reflected light passes through the first lens 231 upwardly and is incident on the first sensor 201 may be also changed.

Meanwhile, since the image is inverted at the focal length, when the test mirror 250 moves to a right side in the X-axis direction as shown in (b) of FIG. 4, the reflected image may move in a direction along the X-axis which is same as an axis along which the test mirror 250 moves, and to a left side which is an opposite direction to a direction in which the test mirror 250 moves.

Accordingly, the control unit 100 may detect displacement in which the test mirror 250 is moved in the X-axis or Y-axis direction, based on a distance by which and a direction in which the reflected image is moved from a position of the reflected image detected in the reference state according to movement of the test mirror 250.

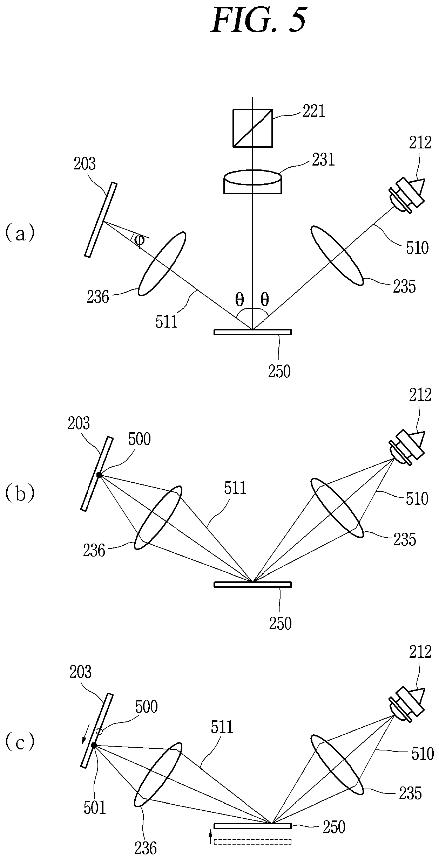

FIG. 5 is a diagram illustrating an example of detecting, by the measurement part 110 of FIG. 2, displacement according to movement of the rigid body, i.e., the test mirror 250 in a Z-axis direction.

**As** described above, to detect Z-axis displacement according to movement of the test mirror 250, an optical system of the measurement part 110 according to embodiment of the present disclosure may further include, in addition to the configuration described with reference to FIGS. 3 and 4, the fifth lens 235 and the second light source 212 arranged along a first diagonal line tilted at a preset angle θ from the Z-axis with respect to the origin, i.e., a center of the test mirror 250 in a reference state, and the sixth lens 236 and the third sensor 203 arranged along a second diagonal line tilted at the preset angle θ from the Z-axis with respect to the origin in a direction facing the first diagonal line.

In this case, the second light source 212 may be arranged to emit light toward the origin along the first diagonal line. In addition, the fifth lens 235 configured as a convex lens may be placed between the second light source 212 and the origin (the test mirror 250). In this case, a distance between the fifth lens 235 and the origin may be determined so that light from the second light source 212 passes through the fifth lens 235 to be concentrated. Accordingly, the light diverged from the second light source 212 may be concentrated on the test mirror 250 while passing through the fifth lens 235. Therefore, the light concentrated on the test mirror 250 may be reflected by the test mirror 250.

In addition, reflected light of the test mirror 250 may be reflected at an incident angle at which the light from the second light source 212 is incident on the test mirror 250, that is, a reflection angle corresponding to the preset angle θ. In this case, since the incident angle is identical to the reflection angle, the reflected light of the test mirror 250 may proceed along the second diagonal line. That is, the sixth lens 236 and the third sensor 203 may be arranged along the reflection angle at which the light from the second light source 212 is reflected onto the test mirror 250 which is in the reference state.

Here, since the fifth lens 235 is configured as a convex lens, the reflected light of the test mirror 250 may be diverged with respect to a focal point defined on the test mirror 250 and reflected. Then, the diverged reflected light may be incident on the sixth lens 236 configured as a convex lens. Therefore, the reflected light may be refracted to converge back in a focal direction while passing through the sixth lens 236.

Meanwhile, the sixth lens 236 and the third sensor 203 may be spaced apart from each other by a distance in correspondence with a position on which light incident on the fifth lens 236 is concentrated. Accordingly, as the reflected light of the test mirror 250 may be concentrated through the sixth lens 236, a focal point may be defined on a surface of the third sensor 203. Here, on the surface of the third sensor 203, a direction of a normal to the surface of the third sensor 203 and an optical axis of the reflected light, i.e., the second diagonal line may define a contained angle Φ according to Equation 1 below. $Φ = Arctan \left(\frac{m}{tan 2 θ}\right)$

**The** contained angle is an angle defined by the normal to the surface of the third sensor and the optical axis of the reflected light from the second light source. The normal is located on a plane determined by the optical axis of the reflected light from the second light source and an optical axis of light incident on the reference point. The contained angle is an angle having a positive sign and measured counterclockwise from the optical axis of the reflected light from the second light source.

In addition, the θ is an angle between a direction of the normal to the test mirror and the optical axis of the second light source, and the m is a positive value of a transverse magnification of the sixth lens, where a distance to the test mirror is an object distance and a distance to the third sensor is an image distance.

Meanwhile, (b) of FIG. 5 illustrates an example of detecting, through an optical system configured as shown in (a) of FIG. 5, a position of reflected light of the test mirror 250 detected by the third sensor 203 when light from the second light source 212 is reflected onto the test mirror 250 which is in the reference state. For example, when the test mirror 250 is in the reference state like this, the reflected light of the test mirror 250 may be concentrated on a center point of the third sensor 203, as shown in (b) of FIG. 5.

In this state, when the test mirror 250 is moved in the Z-axis direction, a position at which light is concentrated on an upper surface of the test mirror 250 may be changed. At this time, defocusing of a light concentration point due to the change of a position in the Z-axis is to be ignored.

**That** is, as shown in (c) of FIG. 5, when the test mirror 250 is moved upward in the Z-axis direction of a rigid body, a position of the light concentration point of light concentration on an upper surface of the test mirror 250 moves upward in the Z-axis direction, more precisely, to a right side in the X-axis direction. Accordingly, through the position of the light concentration point, a change in a position also occurs on an image on the sixth lens 236, which is an optical system that uses a position of the light concentration point as the object distance, and this may be detected by the third sensor 203.

Conversely, when the test mirror 250 is moved downward in a Z-axis direction of a rigid body, a position of a light concentration point of light concentration on an upper surface of the test mirror 250 moves downward in the Z-axis direction, and more precisely, moves further to a left side in the X-axis direction. Therefore, a change in a position occurs on an image on the sixth lens 236. This may be detected by the third sensor 203.

Meanwhile, as shown in the FIG. 2, when an optical system is configured, a part of light from a light source may be reflected or scattered in an undesirable direction by the test mirror 250 or a beam splitter. Therefore, to prevent such unwanted reflected light or scattered light (hereinafter referred to as scattered light) from being incident on an unwanted optical path and cause light to be incident through a designated optical path, the simultaneous multi-axis displacement measurement device 10 according to an embodiment of the present disclosure may include a window through which light may be transmitted in each optical path.

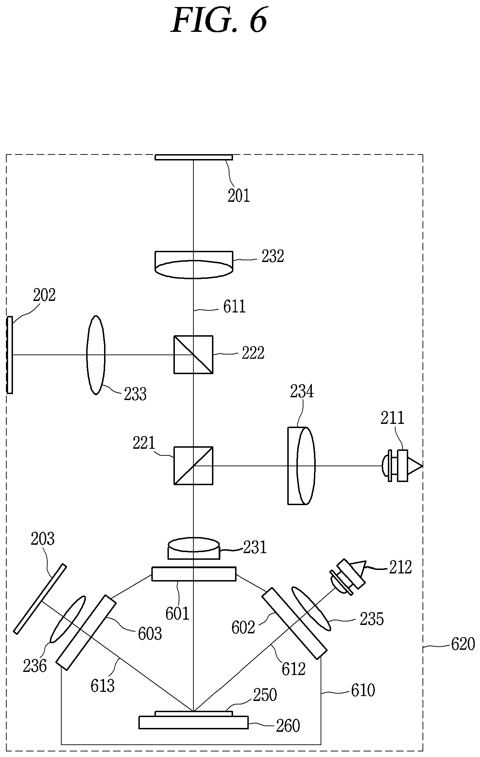

FIG. 6 is a diagram illustrating an example of a configuration of the measurement part 110 including a window configured to prevent scattered light.

Referring to FIG. 6, an optical system disposed in the measurement part 110 according to an embodiment of the present disclosure may have a three-directional optical path. That is, a first light path 611 in which light from the first light source 211 is reflected from the first beam splitter 221 and incident on the test mirror 250, and light reflected from the test mirror 250 is incident on the second beam splitter 222, a second light path 612 in which light from the second light source 212 is incident on the test mirror 250, and a third light path 613 in which the light from the second light source 212 reflected onto the test mirror 250 is incident on the third sensor 203 may be defined. Accordingly, the measurement part 110 according to an embodiment of the present disclosure may have a first window 601 positioned in the first optical path 611, a second window 602 positioned in the second optical path 612, and a third window 603 positioned in the third optical path 613.

Here, the first window 601 may be positioned between the first lens 231 and the test mirror 250 and, in more detail, positioned adjacent to the second surface of the first lens 231. Additionally, the second window 602 and the third window 603 may also be placed between the fifth lens 235 and the test mirror 250 and between the sixth lens 236 and the test mirror 250, respectively. Likewise, the second window 612 and the third window 613 may be positioned adjacent to the fifth lens 235 and the sixth lens 236, respectively.

Meanwhile, the test mirror 250 may be configured so that only the windows 611, 612, and 613 transmit light. That is, as shown in FIG. 6, a portion other than a region in which the windows 611, 612, 613 are disposed may be processed as a sealed room 610 so that light cannot be transmitted. In this case, inside the sealed room 610 may be processed as a dark room to be configured to absorb unwanted reflected light or scattered light.

In addition, the measurement part 110 may be similarly processed as a sealed room so that noise due to ambient light does not occur in detecting the reflected light of the test mirror 250 by the first sensor 201, the second sensor 202, and the third sensor 203. In this case, the measurement part 110 may be configured as a structure of a first sealed room 610 including the region in which the windows 611, 612, and 614 are disposed and a structure of a second sealed room 620 including the whole measurement part 110.

Meanwhile, in this case, when the measurement part 110 includes the windows, reflected light from the first light source 211 reflected onto the test mirror 250 may be reflected by the first window 601. In this case, there is such a problem that at least a part of the light reflected from the first window 601 may be incident on the first sensor 201, the second sensor 202, or the third sensor 203, thereby worsening measurement accuracy. Accordingly, the first window 601 may be disposed so that a direction of a normal to the first window 601 defines a predetermined angle from the Z axis, i.e., the first light path 611 to prevent reflected light from the first window 601 from being introduced.

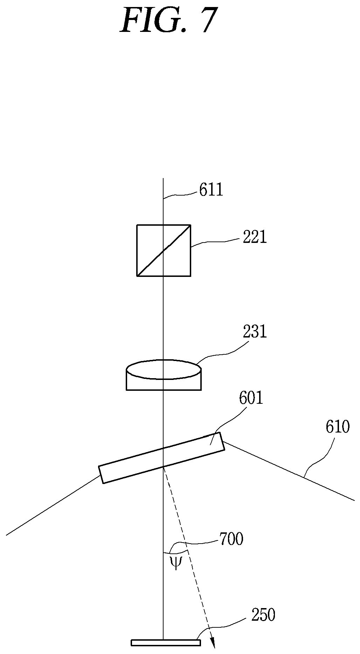

FIG. 7 is a diagram illustrating an example of arranging the first window 601 as described above.

Referring to FIG. 7, the first window 601 may be disposed such that a normal to the first window 601 is inclined at a predetermined angle ψ from the first optical path 611, i.e., the Z-axis defined to have a center of the test mirror 250 as an origin. Since the first window 601 is arranged such that the normal to the first window 601 does not match the optical axis (the first optical path 611), light reflected onto a surface of the first window 601 may be prevented from being incident on sensors. That is, as such, by arranging the first window 601 to be inclined, not only reflected light of the test mirror 250 but also light incident on the first window 601 from the first lens 231 may be prevented from being reflected on the first window 601 and detected by the sensors.

Here, the predetermined angle ψ may have an angle between 1 degree and 5 degrees.

Meanwhile, referring to FIGS. 2 to 7, it has been described that an optical system is configured in the measurement part 110 and movement of the test mirror 250 in the five-axis directions (X, Y, Z, X-axis tilt, and Y-axis tilt) through the optical system are simultaneously detected by the first to third sensors, respectively. Hereinafter, an operation process of detecting, by the control unit 100, displacement according to movement of a rigid body based on a result of measurement by the measurement part 110 is described.

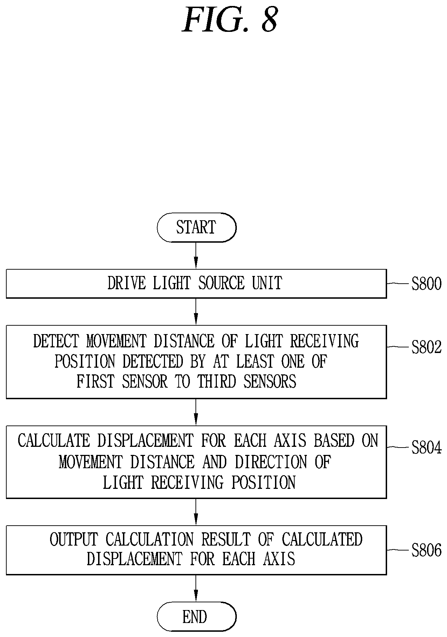

First, FIG. 8 is a flowchart illustrating an operation process of measuring, by the simultaneous multi-axis displacement measurement device 10 according to an embodiment of the present disclosure, displacement according to movement of a rigid body using a result of measurement by the measurement part 110.

Referring to FIG. 8, the control unit 100 of the simultaneous multi-axis displacement measurement device 10 may drive the light source unit 112 of the measurement part 110 to simultaneously turn on a plurality of light sources included in the light source unit 112 (S800). In this case, when the measurement part 110 includes the optical system illustrated in FIG. 2, the first light source 211 and the second light source 212 may be turned on simultaneously to emit light.

In this state, when the test mirror 250 moves according to movement of the rigid body, a position of concentration of reflected light (reflected light for light from the first light source 211) of the test mirror 250 detected by the second sensor 202 may move according to an X-axis or Y-axis tilting state of the test mirror 250 as described with refence to FIG. 3. In addition, as described with reference to FIG. 4, a position of a reflected image (a reflected image for light from the first light source 211) of the test mirror 250 detected by the first sensor 201 may be moved according to movement of the test mirror 250 along the X-axis or Y-axis. In this case, a direction in which the reflected image of the test mirror 250 is moved, with respect to the first sensor 201, may be an opposite direction to a direction in which the test mirror 250 moves.

In addition, as described with reference to FIG. 5, when the test mirror 250 is moved in the Z-axis direction, a light concentration position of reflected light (reflected light for light of the second light source 212) of the test mirror 250 detected by the third sensor 203 may be moved according to the Z-axis movement. Accordingly, an X-axis or Y-axis direction movement state, an X-axis or Y-axis tilting state, and a Z-axis movement state of the test mirror 250 may be detected simultaneously according to a result of detection by each of the first sensor 201, the second sensor 202, and the third sensor 203. In this case, the control unit 100 may detect travel distances and travel directions of reflected light with respect to light from the first light source 211 and reflected light with respect to light from the second light source 212 by each of the first sensor 201, the second sensor 202, and the third sensor 203 (S802).

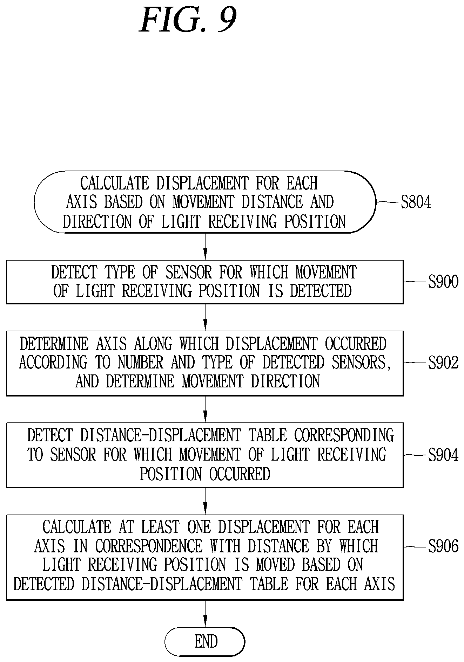

Then, the control unit 100 may calculate displacement of the test mirror 250 in each axial direction based on the travel distances and the travel directions of the reflected light detected in operation S802 (S804). For example, the control unit 100 may calculate displacement in each axial direction detected according to movement of the test mirror 250, based on a distance-displacement table for each sensor in the memory 120. Hereinafter, a process of calculating the displacement for each axial direction in operation S804 is to be described in detail with reference to FIG. 9.

When the displacement for each axis is calculated in operation S804, the control unit 100 may output the calculated displacement for each axis using a preset method (S806). For example, the control unit 100 may output the calculated displacement for each axis in a visual form.

Meanwhile, a user may detect accuracy of the measurement part 110 by comparing the output displacement for each axis with displacement for each axis along which the rigid body has actually moved. Alternatively, when the rigid body is a driving module configured to move according to control by the control unit 100, the control unit 100 may compare the calculated displacement for each axis with a control value of the driving module in operation S806. In this case, the control unit 100 may determine whether the rigid body has moved correctly according to the control by the control unit 100 by comparing the control value of the rigid body with the calculated displacement for each axis.

Meanwhile, as described above, FIG. 9 is a detailed flowchart illustrating an operation process of performing operation S804 for calculating displacement for each axis based on a travel distance and direction of a position in which reflected light is received by each sensor.

Referring to FIG. 9, the control unit 100 may detect at least one sensor for which a receiving position of reflected light, i.e., reflected light concentrated on a focal point or a reflected image is moved, among respective sensors (S900). In this case, when there is a particular sensor for which a light receiving position of the reflected light is not moved, the control unit 100 may determine that the rigid body is not moved in a direction corresponding to the particular sensor. Therefore, the control unit 100 may not detect the particular sensor in operation S900.

In operation S900, when at least one sensor for which a receiving position of reflected light is detected, the control unit 100 may determine at least one axis along which movement of the rigid body occurred according to a number and a type of the detected sensor. In addition, a direction of the movement of the rigid body may be determined according to the determined axis (S902).

For example, when movement of a light receiving position is detected by the first sensor 201, the control unit 100 may determine that the rigid body is moved in at least one direction among directions along the X-axis and the Y-axis. In this case, the control unit 100 may determine a direction of the movement of the rigid body according to a vector component corresponding to an opposite direction to that of movement of the light receiving position.

Additionally, when movement of a light receiving position is detected by the third sensor 203, the control unit 100 may determine that the rigid body is moved in the Z-axis direction. In this case, the control unit 100 may determine a movement direction of the rigid body along the Z-axis as an opposite direction to a direction of the movement of the light receiving position.

In addition, when movement of a light receiving position is detected by the second sensor 202, the control unit 100 may determine that the rigid body has tilted toward the X-axis or the Y-axis. In this case, a direction toward the rigid body is tilted may be determined according to a direction of the movement of the light receiving position.

**As** such, when a movement direction of the rigid body is determined, the control unit 100 may detect, from the memory 120, a distance-displacement table corresponding to each sensor for which movement of a light receiving position has occurred (S904). In this case, the distance-displacement table may be a table including information on displacement for each axis corresponding to a movement distance of the light receiving position. In this case, distance-displacement tables corresponding to the first sensor 201 and the third sensor 203 may include information about different distances by which the rigid body is moved in correspondence with different movement distances of the light receiving position, and the distance-displacement table corresponding to the second sensor 202 may include information about different angles by which the rigid body is rotated in correspondence with different movement distances of the light receiving position.

Then, the control unit 100 may detect displacement for each axis according to movement of the rigid body based on at least one distance-displacement table detected in operation S904 (S906). For example, the control unit 100 may determine at least one of an X-axis movement distance and a Y-axis movement distance based on the movement direction (a vector component corresponding to an opposite direction to a movement direction of the light receiving position) of the rigid body determined in operation S902. In addition, based on the distance-displacement table (e.g., an XY-axes distance-displacement table) corresponding to the first sensor 201, a displacement corresponding to at least one of the determined X-axis movement distance and Y-axis movement distance may be detected. In addition, based on the distance-displacement table (e.g., a Z-axis distance-displacement table) corresponding to the third sensor 203, a displacement corresponding to a movement distance of the light receiving position detected by the third sensor 203 may be detected. Additionally, the control unit 100 may detect a displacement corresponding to a movement distance of a light receiving position detected by the second sensor 202 based on the distance-displacement table (e.g., an XY tilting distance-displacement table) corresponding to the second sensor 202. In this case, the detected displacement may be a tilting angle.

Meanwhile, the distance-displacement tables corresponding to the respective sensors may be tables including information about unit displacement corresponding to a unit distance. That is, the distance-displacement table corresponding to the first sensor 201 may be a table including information about displacement along the X-axis or the Y-axis per unit distance for a movement distance of a light receiving position detected by the first sensor 201. Additionally, the distance-displacement table corresponding to the third sensor 203 may be a table including information about Z-axis displacement per unit distance for a movement distance of a light receiving position detected by the third sensor 203. In addition, the distance-displacement table corresponding to the second sensor 202 may be a table including information about a tilting angle per unit distance for a movement distance of a light receiving position detected by the second sensor 202. In this case, the control unit 100 may calculate displacement for each axis according to a movement distance of a light receiving position according to each sensor, according to unit displacement per unit distance included in the distance-displacement table corresponding to each sensor in operation S906 described with reference to FIG. 9.

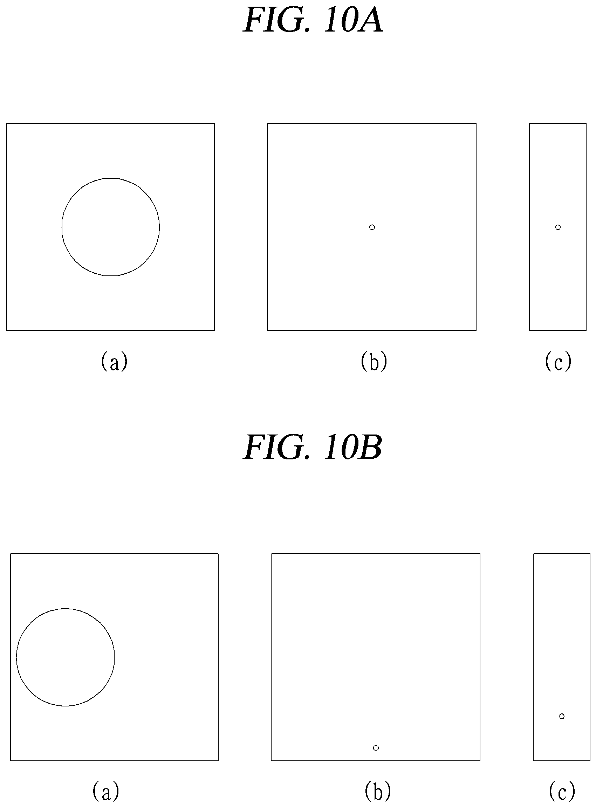

Meanwhile, FIGS. 10A and 10B are diagrams illustrating examples of simultaneously measuring, by the simultaneous multi-axis displacement measurement device 10 according to an embodiment of the present disclosure, movement of a rigid body in five-axis directions. In FIGS. 10A and 10B, (a) illustrates an example of detection by the first sensor 201, (b) illustrates an example of detection by the second sensor 202, and (c) illustrates an example of detection by the third sensor 203.

First, referring to FIG. 10A, FIG. 10A illustrates a light receiving position of reflected light detected by the first sensor 201, the second sensor 202, and the third sensor 203 when the test mirror 250 is in the reference state. That is, when the test mirror 250 is in the reference state, i.e., in a state in which movement of the rigid body is not present, it is assumed that the reflected light reflected from the test mirror 250 is received at a central position of each sensor.

In this case, the test mirror 250 may move to a right side along the X-axis according to movement of the rigid body and, simultaneously, be rotated clockwise with respect to the Y-axis (tilted clockwise toward the Y-axis) and move upward along the Z-axis. In this case, a part of reflected light from the first light source 211 received by the first sensor 201 may be moved to a left side along the X-axis according to movement of the rigid body to a right side along the X-axis ((a) of FIG. 10B).

Additionally, a remaining part of the reflected light from the first light source 211 received by the second sensor 202 may move downward along the Z-axis according to tilting of the rigid body along the Y-axis in a clockwise direction. In this case, since the second sensor 202 is arranged vertically to the first sensor 201, detection may be performed as shown in (b) of FIG. 10B. Likewise, reflected light from the second light source 212 received by the third sensor 203 may be moved downward along the Z-axis according to movement of the rigid body in the Z-axis direction. Accordingly, detection may be performed as shown in (c) of FIG. 10B.

As such, when movement of a light receiving position of reflected light occurs on the first to third sensors according to movement of a rigid body, the control unit 100 may detect a direction in which movement of the rigid body has occurred according to a direction in which a light receiving position is moved at each sensor, as described with reference to FIG. 9. In addition, based on a distance by which the light receiving position is moved at each sensor, a distance by which the rigid body is moved may be detected or calculated. In addition, according to the detected movement direction and movement distance of the rigid body, displacement for each axis according to the movement of the rigid body may be detected.

Meanwhile, although a particular embodiment has been described in the description of the present disclosure, various modifications may be made without departing from the scope of the present disclosure. Although not shown in the embodiment of the present disclosure, a driving unit configured to move or rotate a test mirror in at least one axial direction may be used as a rigid body. In this case, the driving unit may be controlled by the control unit 100 to move (the X-axis, the Y-axis, or the Z-axis) or rotate (X-axis tilt Tx or Y-axis tilt Ty) the test mirror in at least one axial direction according to the control by the control unit 100.

Then, the measurement part 110 may detect, through the optical system described above, a travel distance and a travel direction of reflected light reflected onto a test mirror that is moved or rotated together with the rigid body moved or rotated according to the control by the control unit 100, and the movement of the rigid body according to the travel distance and the travel direction each detected by the measurement part 110 may be calculated as displacement for each axis by the control unit 100. In this case, the control unit 100 may also test performance of the driving unit by comparing the displacement for each axis detected through the measurement part 110 with a result of the control by the driving unit.

In addition, in the above-described embodiment of the present disclosure, an example in which the first beam splitter, the fourth lens, and the first light source are arranged after the first lens along the Z-axis, and the second beam splitter, the third lens, and the second sensor are arranged after the first beam splitter along the Z-axis is described. However, the order described above may be changed. That is, the second beam splitter may be placed after the first lens, and the third lens and the second sensor may be arranged to be directed toward a reflective surface of the second beam splitter. In addition, the first beam splitter may be arranged between the second beam splitter and the second lens to reflect light from the first light source along the Z-axis. In this case, the light emitted from the first light source may be incident on the test mirror by passing through a reflective surface of the first beam splitter and a reflective surface of the second beam splitter.

Meanwhile, according to the above description, the first to sixth lenses may be composite lenses configured as at least one lens. In this case, each of the first to sixth lenses may be configured as at least one convex lens.

According to another embodiment related to the present disclosure, at least some of the first to sixth lenses, for example, the first lens and the fourth lens may be lenses constituting an optical system including a convex lens and a concave lens. As an example, first surfaces of the first lens and the fourth lens (the first lens: a surface facing the first beam splitter, and the fourth lens: a surface facing the first light source) may be configured as convex lenses, and second surfaces (the first lens: a surface facing the test mirror, the fourth lens: a surface facing the first beam splitter) may be configured as concave lenses. In this case, a distance between the convex lens and the concave lens constituting the first lens and the fourth lens may be greater than a focal length of the concave lenses.

## Claims

1. A measurement device configured to simultaneously measure multi-axis displacement of a rigid body, the measurement device having a measurement part (110) comprising:
a test mirror (250) coupled to the rigid body and configured to be capable of moving in a direction toward an X-axis, a Y-axis or a Z-axis and tilting along the X-axis or the Y-axis according to movement of the rigid body;
a first lens (231) configured to transmit incident light incident on a reference point defined on the test mirror (250) and reflected light reflected onto the test mirror (250);
a second lens (232) disposed along an optical axis of the reflected light and configured to transmit incident light as parallel light;
a first sensor (201) configured to detect the movement of the test mirror (250) along the X-axis and the Y-axis, based on a light receiving position of the parallel light transmitted through the second lens (232);
a first light source (211) disposed to be perpendicular to the optical axis of the reflected light;
a first beam splitter (221) disposed between the first lens (231) and the second lens (232), and configured to reflect light from the first light source to define incident light incident on the first lens (231) and transmit the reflected light transmitted through the first lens (231) and being incident;
a second beam splitter (222) disposed between the first lens (231) and the second lens (232), and configured to reflect a part of the reflected light transmitted through the first beam splitter (221) and transmit a remaining part of the reflected light to be incident on the second lens (232);
a second sensor (202) configured to receive the part of the reflected light reflected by the second beam splitter (222) and detect an X-axis or Y-axis tilting angle of the test mirror (250) based on a position of the receiving of the reflected part;
a second light source (212) configured to output light toward the reference point; and
a third sensor (203) configured to receive light from the second light source (212) reflected onto the reference point and, based on a position of the receiving of the light, detect movement of the test mirror (250) along the Z-axis, and
wherein the test mirror (250) has an area smaller than an area of parallel light incident from the first lens (231) on the test mirror (250).

2. The measurement device of claim 1, wherein the first lens (231) is configured to:
comprise a first surface disposed to be directed toward the test mirror (250), and a second surface disposed to be directed toward the second lens (232), and
be disposed such that, when light is incident on the first surface, the incident light is transmitted through the second surface, and when light is incident on the second surface, the incident light is transmitted through the first surface and incident on the test mirror (250).

3. The measurement device of claim 1, wherein the test mirror (250) is disposed at a first focal length (f1) which is a focal length of the first lens (231),
the first lens (231) and the second lens (232) are disposed to be apart from each other by a distance equal to a sum of the first focal length (f1) and a second focal length (f2) which is a focal length of the second lens (232), and
the first sensor (201) is disposed to be apart from the second lens (232) by the second focal length (f2).

4. The measurement device of claim 1, further comprising a third lens (233) configured as a convex lens between the second beam splitter (222) and the second sensor (202),
wherein the second sensor (202) is disposed on a position on which light is concentrated by the third lens (233) so that the part of the reflected light reflected by the second beam splitter (222) is concentrated by the third lens (233) to define a focal point on a surface of the second sensor (202).

5. The measurement device of claim 1, further comprising a fourth lens (234) disposed between the first beam splitter (221) and the first light source (211) and configured to cause light from the first light source (211) to be incident on the first beam splitter (221),
wherein the first light source (211) is positioned at a focal length of a lens group comprising the first lens (231), the first beam splitter (221), and the fourth lens (234) so that light diverged from the first light surface (211) constitutes parallel light that passes through the fourth lens (234), is incident on the first beam splitter (221), is reflected onto the first beam splitter (221), and then, passes through the first lens (231).

6. The measurement device of claim 1, wherein an incident angle of the light from the second light source (212) and a reflection angle of the light from the second light source (212) each define a first predetermined angle with an optical axis defined by the light from the first light source (211), the light being reflected onto the test mirror (250), and
the predetermined first angle is an angle between 25 and 40 degrees.

7. The measurement device of claim 1, further comprising a fifth lens (235) and a sixth lens (236) between the second light source (212) and the reference point and between the reference point and the third sensor (203), respectively,
wherein the fifth lens (235) is disposed so that light incident from the second light source (212) to the reference point is concentrated on the reference point by the fifth lens (235) along an optical axis of the light, and
the third sensor (203) is disposed so that the light from the second light source (212) reflected onto the reference point is concentrated on an upper surface of the third sensor (203) by the sixth lens (236) along an optical axis of the reflected light from the second light source (212).

8. The measurement device of claim 7, wherein a surface of the third sensor (203) defines a contained angle Φ according to Equation below: $Φ = Arctan \left(\frac{m}{tan 2 θ}\right)$
wherein the contained angle is an angle defined by a normal to the surface of the third sensor (203) and the optical axis of the reflected light from the second light source (212), the normal is located on a plane determined by the optical axis of the reflected light from the second light source (212) and an optical axis of light incident on the reference point, and the contained angle is an angle having a positive sign and measured in a counterclockwise direction from the optical axis of the reflected light from the second light source (212), and
the θ is an angle between a direction of the normal to the test mirror (250) and the optical axis of the second light source (212), and the m is a positive value of a transverse magnification of the sixth lens (236), wherein a distance to the test mirror (250) is an object distance and a distance to the third sensor (203) is an image distance.

9. The measurement device of claim 7, wherein the measurement part (110) comprises a sealed room (610) surrounding a periphery of the test mirror (250) to prevent scattered light of the test mirror from being transmitted, and
the sealed room (610) comprises:
a first window (601) disposed between the first lens (231) and the test mirror (250) to transmit incident light from the first light source (211), the incident light being incident on the test mirror (250), and reflected light from the first light source (211), the reflected light being reflected onto the test mirror (250);
a second window (602) disposed between the fifth lens (235) and the test mirror (250) to transmit incident light from the second light source (212), the incident light being incident on the test mirror (250); and
a third window (603) disposed between the sixth lens (236) and the test mirror (250) to transmit reflected light from the second light source (212), the reflected light being reflected from the test mirror (250).

10. The measurement device of claim 9, wherein the first window (601) is disposed such that a normal to the first window (601) is tilted at a second predetermined angle from an optical axis defined by the reflected light from the first light source (211), the reflected light being reflected onto the test mirror (250), and
the second predetermined angle has an angle between 1 degree and 5 degrees depending on a distance between the first window (601) and the test mirror (250).

11. The measurement device of claim 1, comprising:
the measurement part (110);
a memory (120) comprising distance-displacement tables corresponding to the first to third sensors (201, 202, 203) in the measurement part, respectively; and
a control unit (100) configured to calculate movement distances in directions toward the X-axis, the Y-axis, and the Z-axis, and a tilting angle along the X-axis or the Y-axis with respect to the rigid body in correspondence with a detection value detected by each of the first to third sensors (201, 202, 203) in the measurement part (110), based on the distance-displacement tables corresponding to the first to third sensors (201, 202, 203), respectively.

12. The measurement device of claim 11, wherein the controller (100) is configured to:
detect a direction of planar movement of the rigid body based on a direction of movement of a light receiving position of reflected light of the first light source (211), the light receiving position being detected by the first sensor (201);
detect a tilting direction of the rigid body based on a direction of movement of a light receiving position of the reflected light of the first light source (211), the light receiving position being detected by the second sensor (202); and
detect a direction of movement of the rigid body in the Z-axis direction based on a direction of movement of a light receiving position of reflected light of the second light source (212), the light receiving position being detected by the third sensor (203), to simultaneously detect a multi-axis direction movement of the rigid body.

## Patentansprüche

1. Messvorrichtung, die dazu eingerichtet ist, gleichzeitig eine mehrachsige Verschiebung eines starren Körpers zu messen, wobei die Messvorrichtung ein Messteil (110) aufweist, umfassend:
einen Testspiegel (250), der mit dem starren Körper gekoppelt ist und so eingerichtet ist, dass er in der Lage ist, sich in Richtung einer X-Achse, einer Y-Achse oder einer Z-Achse zu bewegen und sich gemäß einer Bewegung des starren Körpers um die X-Achse oder die Y-Achse zu neigen;
eine erste Linse (231), die dazu eingerichtet ist, einfallendes Licht, das auf einen auf dem Testspiegel (250) definierten Referenzpunkt einfällt, und reflektiertes Licht, das am Testspiegel (250) reflektiert wird, durchzulassen;
eine zweite Linse (232), die entlang einer optischen Achse des reflektierten Lichts angeordnet und dazu eingerichtet ist, einfallendes Licht als paralleles Licht durchzulassen;
einen ersten Sensor (201), der dazu eingerichtet ist, die Bewegung des Testspiegels (250) entlang der X-Achse und der Y-Achse basierend auf einer Lichtempfangsposition des durch die zweite Linse (232) durchgelassenen parallelen Lichts zu erfassen;
eine erste Lichtquelle (211), die so angeordnet ist, dass sie senkrecht zur optischen Achse des reflektierten Lichts steht;
einen ersten Strahlteiler (221), der zwischen der ersten Linse (231) und der zweiten Linse (232) angeordnet und dazu eingerichtet ist, Licht von der ersten Lichtquelle zu reflektieren, um einfallendes Licht zu definieren, das auf die erste Linse (231) einfällt, und das durch die erste Linse (231) hindurch einfallende reflektierte Licht durchzulassen;
einen zweiten Strahlteiler (222), der zwischen der ersten Linse (231) und der zweiten Linse (232) angeordnet und dazu eingerichtet ist, einen Teil des durch den ersten Strahlteiler (221) durchgelassenen reflektierten Lichts zu reflektieren und einen verbleibenden Teil des reflektierten Lichts durchzulassen, damit es auf die zweite Linse (232) einfällt;
einen zweiten Sensor (202), der dazu eingerichtet ist, den durch den zweiten Strahlteiler (222) reflektierten Teil des reflektierten Lichts zu empfangen und einen Neigungswinkel des Testspiegels (250) um die X-Achse oder die Y-Achse basierend auf einer Lichtempfangsposition des reflektierten Teils zu erfassen;
eine zweite Lichtquelle (212), die dazu eingerichtet ist, Licht in Richtung des Referenzpunkts auszugeben; und
einen dritten Sensor (203), der dazu eingerichtet ist, auf den Referenzpunkt reflektiertes Licht von der zweiten Lichtquelle (212) zu empfangen und basierend auf einer Lichtempfangsposition eine Bewegung des Testspiegels (250) entlang der Z-Achse zu erfassen, und
wobei der Testspiegel (250) eine Fläche aufweist, die kleiner ist als eine Fläche von parallelem Licht, das von der ersten Linse (231) auf den Testspiegel (250) einfällt.

2. Messvorrichtung nach Anspruch 1, wobei die erste Linse (231) dazu eingerichtet ist:
eine erste Oberfläche, die so angeordnet ist, dass sie in Richtung des Testspiegels (250) gerichtet ist, und eine zweite Oberfläche, die so angeordnet ist, dass sie in Richtung der zweiten Linse (232) gerichtet ist, zu umfassen, und
so angeordnet zu sein, dass, wenn Licht auf die erste Oberfläche einfällt, das einfallende Licht durch die zweite Oberfläche durchgelassen wird, und wenn Licht auf die zweite Oberfläche einfällt, das einfallende Licht durch die erste Oberfläche durchgelassen wird und auf den Testspiegel (250) einfällt.

3. Messvorrichtung nach Anspruch 1, wobei der Testspiegel (250) in einer ersten Brennweite (f1) angeordnet ist, die eine Brennweite der ersten Linse (231) ist,
die erste Linse (231) und die zweite Linse (232) so angeordnet sind, dass sie in einem Abstand voneinander angeordnet sind, der gleich einer Summe aus der ersten Brennweite (f1) und einer zweiten Brennweite (f2) ist, die eine Brennweite der zweiten Linse (232) ist, und
der erste Sensor (201) so angeordnet ist, dass er von der zweiten Linse (232) um die zweite Brennweite (f2) beabstandet ist.

4. Messvorrichtung nach Anspruch 1, ferner umfassend eine dritte Linse (233), die zwischen dem zweiten Strahlteiler (222) und dem zweiten Sensor (202) als konvexe Linse eingerichtet ist,
wobei der zweite Sensor (202) an einer Position angeordnet ist, an der Licht durch die dritte Linse (233) konzentriert wird, so dass der Teil des durch den zweiten Strahlteiler (222) reflektierten Lichts durch die dritte Linse (233) konzentriert wird, um einen Brennpunkt auf einer Oberfläche des zweiten Sensors (202) zu definieren.

5. Messvorrichtung nach Anspruch 1, ferner umfassend eine vierte Linse (234), die zwischen dem ersten Strahlteiler (221) und der ersten Lichtquelle (211) angeordnet und dazu eingerichtet ist, zu bewirken, dass Licht von der ersten Lichtquelle (211) auf den ersten Strahlteiler (221) einfällt,
wobei die erste Lichtquelle (211) in einer Brennweite einer Linsengruppe positioniert ist, die die erste Linse (231), den ersten Strahlteiler (221) und die vierte Linse (234) umfasst, so dass von der ersten Lichtquelle (211) divergierendes Licht paralleles Licht bildet, das durch die vierte Linse (234) tritt, auf den ersten Strahlteiler (221) einfällt, auf den ersten Strahlteiler (221) reflektiert wird und dann durch die erste Linse (231) tritt.

6. Messvorrichtung nach Anspruch 1, wobei ein Einfallswinkel des Lichts von der zweiten Lichtquelle (212) und ein Reflexionswinkel des Lichts von der zweiten Lichtquelle (212) jeweils einen ersten vorbestimmten Winkel mit einer optischen Achse definieren, die durch das Licht von der ersten Lichtquelle (211) definiert wird, wobei das Licht am Testspiegel (250) reflektiert wird, und
der erste vorbestimmte Winkel zwischen 25 und 40 Grad liegt.

7. Messvorrichtung nach Anspruch 1, ferner umfassend eine fünfte Linse (235) und eine sechste Linse (236) zwischen der zweiten Lichtquelle (212) und dem Referenzpunkt bzw. zwischen dem Referenzpunkt und dem dritten Sensor (203),
wobei die fünfte Linse (235) so angeordnet ist, dass von der zweiten Lichtquelle (212) auf den Referenzpunkt einfallendes Licht auf den Referenzpunkt durch die fünfte Linse (235) entlang einer optischen Achse des Lichts konzentriert wird, und
der dritte Sensor (203) so angeordnet ist, dass das von der zweiten Lichtquelle (212) auf den Referenzpunkt reflektierte Licht durch die sechste Linse (236) entlang einer optischen Achse des reflektierten Lichts von der zweiten Lichtquelle (212) auf eine obere Oberfläche des dritten Sensors (203) konzentriert wird.

8. Messvorrichtung nach Anspruch 7, wobei eine Oberfläche des dritten Sensors (203) einen eingeschlossenen Winkel Φ gemäß der nachstehenden Gleichung definiert: $Φ = Arctan \left(\frac{m}{tan 2 θ}\right)$
wobei der eingeschlossene Winkel ein Winkel ist, der durch eine Normale zur Oberfläche des dritten Sensors (203) und die optische Achse des reflektierten Lichts von der zweiten Lichtquelle (212) definiert wird, die Normale sich auf einer Ebene befindet, die durch die optische Achse des reflektierten Lichts von der zweiten Lichtquelle (212) und eine optische Achse des auf den Referenzpunkt einfallenden Lichts bestimmt wird, und der eingeschlossene Winkel ein Winkel mit einem positiven Vorzeichen ist und in einer Richtung gegen den Uhrzeigersinn von der optischen Achse des reflektierten Lichts von der zweiten Lichtquelle (212) gemessen wird, und
θ ein Winkel zwischen einer Richtung der Normalen zum Testspiegel (250) und der optischen Achse der zweiten Lichtquelle (212) ist, und m ein positiver Wert einer transversalen Vergrößerung der sechsten Linse (236) ist, wobei ein Abstand zum Testspiegel (250) eine Gegenstandsweite und ein Abstand zum dritten Sensor (203) eine Bildweite ist.

9. Messvorrichtung nach Anspruch 7, wobei das Messteil (110) einen abgedichteten Raum (610) umfasst, der einen Umfang des Testspiegels (250) umgibt, um zu verhindern, dass Streulicht des Testspiegels durchgelassen wird, und
der abgedichtete Raum (610) umfasst:
ein erstes Fenster (601), das zwischen der ersten Linse (231) und dem Testspiegel (250) angeordnet ist, um von der ersten Lichtquelle (211) einfallendes Licht, wobei das einfallende Licht auf den Testspiegel (250) einfällt, und reflektiertes Licht von der ersten Lichtquelle (211), wobei das reflektierte Licht am Testspiegel (250) reflektiert wird, durchzulassen;
ein zweites Fenster (602), das zwischen der fünften Linse (235) und dem Testspiegel (250) angeordnet ist, um von der zweiten Lichtquelle (212) einfallendes Licht durchzulassen, wobei das einfallende Licht auf den Testspiegel (250) einfällt; und
ein drittes Fenster (603), das zwischen der sechsten Linse (236) und dem Testspiegel (250) angeordnet ist, um reflektiertes Licht von der zweiten Lichtquelle (212) durchzulassen, wobei das reflektierte Licht von dem Testspiegel (250) reflektiert wird.

10. Messvorrichtung nach Anspruch 9, wobei das erste Fenster (601) so angeordnet ist, dass eine Normale des ersten Fensters (601) gegenüber einer optischen Achse, die durch das reflektierte Licht von der ersten Lichtquelle (211) definiert wird, um einen zweiten vorbestimmten Winkel geneigt ist, wobei das reflektierte Licht am Testspiegel (250) reflektiert wird, und
der zweite vorbestimmte Winkel in Abhängigkeit von einem Abstand zwischen dem ersten Fenster (601) und dem Testspiegel (250) zwischen 1 Grad und 5 Grad liegt.

11. Messvorrichtung nach Anspruch 1, umfassend:
das Messteil (110);
einen Speicher (120), der Abstands-Verschiebungs-Tabellen umfasst, die jeweils einem der ersten bis dritten Sensoren (201, 202, 203) in dem Messteil entsprechen; und
eine Steuereinheit (100), die dazu eingerichtet ist, basierend auf den Abstands-Verschiebungs-Tabellen, die jeweils einem der ersten bis dritten Sensoren (201, 202, 203) entsprechen, Bewegungsstrecken in Richtung der X-Achse, der Y-Achse und der Z-Achse sowie einen Neigungswinkel des starren Körpers um die X-Achse oder die Y-Achse entsprechend den von den jeweiligen ersten bis dritten Sensoren (201, 202, 203) im Messteil (110) erfassten Erfassungswerten zu berechnen.

12. Messvorrichtung nach Anspruch 11, wobei die Steuereinheit (100) eingerichtet ist zum:
Erfassen einer Richtung einer planaren Bewegung des starren Körpers basierend auf einer Bewegungsrichtung einer Lichtempfangsposition von reflektiertem Licht der ersten Lichtquelle (211), wobei die Lichtempfangsposition durch den ersten Sensor (201) erfasst wird;
Erfassen einer Neigungsrichtung des starren Körpers basierend auf einer Bewegungsrichtung einer Lichtempfangsposition des reflektierten Lichts der ersten Lichtquelle (211), wobei die Lichtempfangsposition durch den zweiten Sensor (202) erfasst wird; und
Erfassen einer Bewegungsrichtung des starren Körpers in der Richtung der Z-Achse basierend auf einer Bewegungsrichtung einer Lichtempfangsposition von reflektiertem Licht der zweiten Lichtquelle (212), wobei die Lichtempfangsposition durch den dritten Sensor (203) erfasst wird, um gleichzeitig eine Bewegung des starren Körpers in mehreren Achsrichtungen zu erfassen.

## Revendications

1. Dispositif de mesure configuré pour mesurer simultanément le déplacement multiaxial d'un corps rigide, le dispositif de mesure comportant une partie de mesure (110) comprenant:
un miroir d'essai (250) relié au corps rigide et conçu pour pouvoir se déplacer dans une direction vers l'axe X, l'axe Y ou l'axe Z et s'incliner le long de l'axe X ou de l'axe Y en fonction du mouvement du corps rigide;
une première lentille (231) conçue pour transmettre la lumière incidente sur un point de référence défini sur le miroir d'essai (250) et la lumière réfléchie sur le miroir d'essai (250);
une deuxième lentille (232) disposée le long de l'axe optique de la lumière réfléchie et conçue pour transmettre la lumière incidente sous forme de lumière parallèle;
un premier capteur (201) conçu pour détecter le déplacement du miroir d'essai (250) le long des axes X et Y, en fonction de la position de réception de la lumière parallèle transmise par la deuxième lentille (232);
une première source lumineuse (211) disposée de manière à être perpendiculaire à l'axe optique de la lumière réfléchie;
un premier séparateur de faisceau (221) disposé entre la première lentille (231) et la deuxième lentille (232), et conçu pour réfléchir la lumière provenant de la première source lumineuse afin de définir la lumière incidente sur la première lentille (231) et pour transmettre la lumière réfléchie transmise par la première lentille (231) et qui est incidente;
un deuxième séparateur de faisceau (222) disposé entre la première lentille (231) et la deuxième lentille (232), et conçu pour réfléchir une partie de la lumière réfléchie transmise par le premier séparateur de faisceau (221) et pour transmettre la partie restante de la lumière réfléchie pour qu'elle soit incidente sur la deuxième lentille (232);
un deuxième capteur (202) conçu pour recevoir la partie de la lumière réfléchie par le deuxième séparateur de faisceau (222) et pour détecter un angle d'inclinaison d'axe X ou d'axe Y du miroir d'essai (250) en fonction de la position de réception de la partie réfléchie;
une deuxième source lumineuse (212) conçue pour émettre de la lumière en direction du point de référence; et
un troisième capteur (203) conçu pour recevoir la lumière provenant de la deuxième source lumineuse (212) réfléchie sur le point de référence et, en fonction de la position de réception de la lumière, pour détecter le déplacement du miroir de test (250) le long de l'axe Z, et
dans lequel le miroir d'essai (250) présente une surface inférieure à celle du faisceau lumineux parallèle incident provenant de la première lentille (231) sur le miroir d'essai (250).

2. Dispositif de mesure selon la revendication 1, l'organe de commande de charge (231) étant conçu pour:
comprendre une première surface disposée de manière à être orientée vers le miroir d'essai (250) et une deuxième surface disposée de manière à être orientée vers la deuxième lentille (232), et
être disposée de telle sorte que, lorsque la lumière est incidente sur la première surface, la lumière incidente soit transmise par la deuxième surface, et que, lorsque la lumière est incidente sur la deuxième surface, la lumière incidente soit transmise par la première surface et incidente sur le miroir d'essai (250).

3. Dispositif de mesure selon la revendication 1, dans lequel le miroir d'essai (250) est disposé à une première distance focale (f1) qui correspond à la distance focale de la première lentille (231),
la première lentille (231) et la deuxième lentille (232) sont disposées de manière à être séparées l'une de l'autre d'une distance égale à la somme de la première distance focale (f1) et d'une deuxième distance focale (f2), qui correspond à la distance focale de la deuxième lentille (232), et
le premier capteur (201) est disposé de manière à se trouver à une distance de la deuxième lentille (232) égale à la deuxième distance focale (f2).

4. Dispositif de mesure selon la revendication 1, comprenant en outre une troisième lentille (233) conçue sous forme de lentille convexe, située entre le deuxième séparateur de faisceau (222) et le deuxième capteur (202),
dans lequel le deuxième capteur (202) est disposé à un emplacement où la lumière est concentrée par la troisième lentille (233), de sorte que la partie de la lumière réfléchie par le deuxième séparateur de faisceau (222) soit concentrée par la troisième lentille (233) afin de définir un point focal sur une surface du deuxième capteur (202).

5. Dispositif de mesure selon la revendication 1, comprenant en outre une quatrième lentille (234) disposée entre le premier séparateur de faisceau (221) et la première source lumineuse (211) et conçue pour amener la lumière provenant de la première source lumineuse (211) à être incidente sur le premier séparateur de faisceau (221),
dans lequel la première source lumineuse (211) est positionnée à la distance focale d'un groupe de lentilles comprenant la première lentille (231), le premier séparateur de faisceau (221) et la quatrième lentille (234), de sorte que la lumière divergée depuis la première surface lumineuse (211) forme une lumière parallèle qui traverse la quatrième lentille (234), est incidente sur le premier séparateur de faisceau (221), est réfléchie par le premier séparateur de faisceau, puis traverse la première lentille (231).

6. Dispositif de mesure selon la revendication 1, dans lequel un angle d'incidence de la lumière provenant de la deuxième source lumineuse (212) et un angle de réflexion de la lumière provenant de la deuxième source lumineuse (212) définissent chacun un premier angle prédéterminé par rapport à un axe optique défini par la lumière provenant de la première source lumineuse (211), la lumière étant réfléchie sur le miroir d'essai (250), et
le premier angle prédéterminé est un angle compris entre 25 et 40 degrés.

7. Dispositif de mesure selon la revendication 1, comprenant en outre une cinquième lentille (235) et une sixième lentille (236) situées respectivement entre la deuxième source lumineuse (212) et le point de référence, et entre le point de référence et le troisième capteur (203),
dans lequel la cinquième lentille (235) est disposée de telle sorte que la lumière provenant de la deuxième source lumineuse (212) et incidente sur le point de référence soit concentrée sur le point de référence par la cinquième lentille (235) le long d'un axe optique de la lumière, et
le troisième capteur (203) est disposé de telle sorte que la lumière provenant de la deuxième source lumineuse (212) et réfléchie sur le point de référence soit concentrée sur une surface supérieure du troisième capteur (203) par la sixième lentille (236), le long d'un axe optique de la lumière réfléchie provenant de la deuxième source lumineuse (212).

8. Dispositif de mesure de la revendication 7, dans laquelle une surface du troisième capteur (203) définit un angle inclus Φ selon l'équation ci-dessous: $Φ = Arctan \left(\frac{m}{tan 2 θ}\right)$
dans lequel l'angle compris est un angle défini par une normale à la surface du troisième capteur (203) et l'axe optique de la lumière réfléchie provenant par la deuxième source lumineuse (212), la normale est située dans un plan déterminé par l'axe optique de la lumière réfléchie provenant de la deuxième source lumineuse (212) et un axe optique de la lumière incidente sur le point de référence, et l'angle inclus est un angle de signe positif, mesuré dans le sens antihoraire à partir de l'axe optique de la lumière réfléchie provenant de la deuxième source lumineuse (212), et
θ est l'angle formé entre la direction de la normale au miroir de test (250) et l'axe optique de la deuxième source lumineuse (212), et m est une valeur positive correspondant au grossissement transversal de la sixième lentille (236), la distance au miroir de test (250) étant la distance objet et la distance au troisième capteur (203) étant la distance image.

9. Dispositif de mesure selon la revendication 7, dans lequel la partie de mesure (110) comprend une chambre étanche (610) entourant la périphérie du miroir d'essai (250) afin d'empêcher la transmission de la lumière diffusée par ce dernier, et
la chambre étanche (610) comprend:
une première fenêtre (601) disposée entre la première lentille (231) et le miroir d'essai (250) afin de transmettre la lumière incidente provenant de la première source lumineuse (211), la lumière incidente étant incidente sur le miroir d'essai (250), et la lumière réfléchie provenant de la première source lumineuse (211), la lumière réfléchie étant réfléchie sur le miroir d'essai (250);
une deuxième fenêtre (602) disposée entre la cinquième lentille (235) et le miroir de test (250) pour transmettre la lumière incidente provenant de la deuxième source lumineuse (212), la lumière étant incidente sur le miroir de test (250); et
une troisième fenêtre (603) disposée entre la sixième lentille (236) et le miroir d'essai (250) afin de transmettre la lumière réfléchie provenant de la deuxième source lumineuse (212), la lumière réfléchie étant réfléchie par le miroir d'essai (250).

10. Dispositif de mesure selon la revendication 9, dans lequel la première fenêtre (601) est disposée de telle sorte qu'une normale à la première fenêtre (601) soit inclinée selon un deuxième angle prédéterminé par rapport à un axe optique défini par la lumière réfléchie provenant de la première source lumineuse (211), la lumière réfléchie étant réfléchie sur le miroir d'essai (250), et
le deuxième angle prédéterminé est compris entre 1 degré et 5 degrés, en fonction de la distance entre la première fenêtre (601) et le miroir d'essai (250).

11. Dispositif de mesure selon la revendication 1, comprenant:
la partie de mesure (110);
une mémoire (120) comprenant des tableaux distance-déplacement correspondant respectivement aux premier, deuxième et troisième capteurs (201, 202, 203) de la partie de mesure; et
une unité de commande (100) configurée pour calculer des distances de déplacement dans les directions vers l'axe X, de l'axe Y et de l'axe Z, ainsi qu'un angle d'inclinaison le long de l'axe X ou de l'axe Y par rapport au corps rigide, en fonction d'une valeur de détection détectée par chacun des premier, deuxième, troisième capteurs (201, 202, 203) dans la partie de mesure (110), sur la base des tableaux de distance-déplacement correspondant respectivement aux premier, deuxième, troisième capteurs (201, 202, 203).

12. Dispositif de mesure selon la revendication 11, dans lequel l'organe de commande (100) est configuré pour:
détecter une direction de déplacement plan du corps rigide en fonction d'une direction de déplacement d'un point de réception de la lumière réfléchie de la première source lumineuse (211), le point de réception étant détecté par le premier capteur (201);
détecter une direction d'inclinaison du corps rigide en fonction d'une direction de déplacement d'un point de réception de lumière de la lumière réfléchie de la première source lumineuse (211), le point de réception étant détecté par le deuxième capteur (202); et
détecter une direction de déplacement du corps rigide selon l'axe Z en fonction d'une direction de déplacement d'une position de réception de la lumière réfléchie de la deuxième source lumineuse (212), la position de réception de lumière étant détectée par le troisième capteur (203), afin de détecter simultanément un déplacement dans une direction multiaxiale du corps rigide.
